# EUROPÄISCHE PATENTANMELDUNG

(11) **EP 4 799 767 A1**
(43) Veröffentlichungstag der Anmeldung: **02.09.2026**
(21) Anmeldenummer: 26156305.0
(22) Anmeldetag: 04.02.2026
(51) Int. Cl.: B25F 5/02, H01M 50/247

(54) **BATTERIEADAPTER**

(30) Priorität: 27.02.2025 DE 102025000738
(71) Anmelder: Robert Bosch GmbH, 70442 Stuttgart (DE)
(72) Erfinder: Wong, Jeff, Slowmarket, IP14 1EY (GB); Schrottenholzer, Rene, 71126 Gaeufelden (DE); Hirschburger, Wolfgang, 72762 Reutlingen (DE)

(57) **Zusammenfassung**

Es wird ein Batterieadapter (100) für ein Elektrowerkzeug (200) mit einem Kontaktierungselement (120) zur elektrischen Kontaktierung mit dem Elektrowerkzeug (200), mit einem Führungselement (140) zur Führung in einer Führungsaufnahme (202) des Elektrowerkzeugs (200) und mit einem Verriegelungselement (160) zur Verriegelung mit einem Gehäuse (206) des Elektrowerkzeugs (200), offenbart.

Es wird vorgeschlagen, dass der Batterieadapter (100) ein Verschlusselement (180) aufweist, das dazu ausgebildet ist, das Verriegelungselement (160) zu verschließen., offenbart.

## Beschreibung

Die vorliegende Erfindung betrifft einen Batterieadapter nach dem Oberbegriff des Anspruches 1.

### Stand der Technik

DE 20 2015 004 274 U1 beschreibt ein Elektrowerkzeugsystem mit zumindest einem Elektrowerkzeug, welches eine Aufnahme zur zumindest teilweisen Einbringung eines Akkupacks besitzt, wobei das Elektrowerkzeugsystem einen Batterieadapter aufweist, der vorgesehen ist, zumindest eine Batterie (16) austauschbar aufzunehmen und zur mechanischen und elektrischen Kontaktierung mit dem zumindest einen Elektrowerkzeug.

### Offenbarung der Erfindung

Die vorliegende Erfindung geht aus von einem Batterieadapter für ein Elektrowerkzeug mit einem Kontaktierungselement zur elektrischen Kontaktierung mit dem Elektrowerkzeug, mit einem Führungselement zur Führung in einer Führungsaufnahme des Elektrowerkzeugs und mit einem Verriegelungselement zur Verriegelung mit einem Gehäuse des Elektrowerkzeugs. Es wird vorgeschlagen, dass der Batterieadapter ein Verschlusselement aufweist, das dazu ausgebildet ist, das Verriegelungselement zu verschließen.

Die Erfindung stellt einen Batterieadapter bereit, bei dem eine Robustheit, insbesondere bei Falltests, erhöht wird. Dabei wird die Robustheit auch in Zuständen erhöht, bei denen der Batterieadapter mit dem Elektrowerkzeug verbunden ist.

Der Batterieadapter dient der Aufnahme von zumindest einer, bevorzugt einer Mehrzahl von Batterien. Insbesondere kann es sich bei den Batterien um Primärbatterien oder um Sekundärbatterien handeln. Bevorzugt lassen sich kommerziell erhältliche Batterien, insbesondere beispielsweise Alkali-Mangan-Batterien, Nickel-Metallhydrid-Batterien, Lithium-Ionen-Batterien oder auch Lithium-Ionen-Ackumulatoren, in Verbindung mit dem Batterieadapter zur Energieversorgung des Elektrowerkzeugs verwenden. Bevorzugt ist der Batterieadapter vorgesehen, Batterien mit verschiedenen Durchmessern und/oder Längen aufzunehmen, wodurch die Anwendung verschiedener, insbesondere kommerziell erhältlicher, Batterien in dem Batterieadapter erreicht werden kann. Bevorzugt ist der Batterieadapter vorgesehen, kommerziell erhältliche Primärbatterien in AA-, AAA- und/oder 9-Volt-Blockbatterien-Format aufzunehmen.

Unter Elektrowerkzeug können Handwerkzeugmaschinen und/oder Messwerkzeuge verstanden werden. Handwerkzeugmaschinen können dabei beispielsweise ein Schrauber, ein Bohrschrauber, ein Schlagschrauber, ein Drehschlagschrauber, eine Bohrmaschine, ein Bohrhammer, eine Stichsäge, eine Säge, ein Schleifer, ein Winkelschleifer, eine Kreissäge, eine Hobelmaschine, eine Schere, ein Multifunktionswerkzeug oder dergleichen sein. Messwerkzeuge können beispielsweise als ein Wärmemessgerät, eine Wärmebildkamera, eine Inspektionskamera, ein Spannungsmessgerät, ein Ortungsgerät, ein Entfernungsmessgerät, ein Feuchtigkeitsmessgerät, Winkel- oder Nivelliermesswerkzeug oder dergleichen sein.

Der Batterieadapter weist ein Gehäuse auf. Das Gehäuse kann durch das Kontaktierungselement, das Führungselement, das Verriegelungselement und das Verschlusselement gebildet werden. Das Kontaktierungselement ist dazu ausgebildet, die elektrische Kontaktierung mit dem Elektrowerkzeug auszubilden. Dies ermöglicht, dass wenn der Batterieadapter mit dem Elektrowerkzeug verbunden ist, elektrische Energie von dem Batterieadapter bereitgestellt wird und das Elektrowerkzeug die elektrische Energie von dem Batterieadapter entnehmen kann, sofern der Batterieadapter eingesetzte Batterien aufweist. Das Kontaktierungselement weist einen Kontaktierungsdom auf. Der Kontaktierungsdom kann zwei längliche Öffnungen aufweisen. Das Elektrowerkzeug weist eine korrespondierende elektrische Aufnahme auf. Die korrespondierende elektrische Aufnahme kann beispielsweise zwei längliche, flache Stifte aufweisen. Dabei können dann die Stifte in die Öffnungen eingreifen. Das Kontaktierungselement umschließt zumindest teilweise Kontaktklemmen und Kontaktierungsfedern. Die Kontaktklemmen sind dazu ausgebildet, die Stifte des Elektrowerkzeugs zumindest teilweise zu umschließen und eine elektrische Verbindung auszubilden. Die Kontaktierungsfedern können dazu ausgebildet sein, die eingesetzten Batterien zu beaufschlagen. Das Führungselement kann als ein Führungsgerüst ausgebildet sein. Dabei kann das Führungselement kompatibel zu der Führungsaufnahme des Elektrowerkzeugs ausgebildet sein. Das Führungselement kann zu einer Längsführung, beispielsweise innerhalb eines Handgriffs des Elektrowerkzeugs, dienen. Hierzu kann das Führungselement zumindest eine Längsführung aufweisen, die beispielsweise nach Art einer Schiene ausgebildet ist. Beispielsweise können eine, zwei, drei oder mehr als drei Längsführungen vorgesehen sein. Die Führungsaufnahme kann in einem Innenraum des Handgriffs des Elektrowerkzeug ausgebildet sein. Die Führungsaufnahme kann zu einer Verdrehsicherung des Batterieadapters in der Führungsaufnahme des Elektrowerkzeugs ausgebildet sein. Die Führungsaufnahme des Elektrowerkzeugs kann in Form eines im Wesentlichen zylindrischen Schachts ausgebildet sein. Das Führungselement kann ein Festlegungselement aufweisen. Das Festlegungselement kann in einem Innenraum des Führungselements ausgebildet sein. Das Festlegungselement kann beispielsweise in Form eines Festlegungsstegs ausgebildet sein. Das Festlegungselement kann dazu ausgebildet sein, die eingesetzten Batterien relativ zueinander festzulegen. Dies kann ermöglichen, dass die eingesetzten Batterien im Wesentlichen unbeweglich innerhalb des Batterieadapter anordenbar sind. Das Verriegelungselement ist dazu ausgebildet, die Verriegelung mit dem Gehäuse des Elektrowerkzeugs auszubilden. Das Verriegelungselement weist zumindest einen Haken auf, der dazu ausgebildet ist, in eine Aufnahme des Handgriffs des Elektrowerkzeugs einzugreifen und hierrüber den Batterieadapter mit dem Elektrowerkzeug zu verriegeln. Das Verriegelungselement weist zwei gegenüberliegend zueinander ausgebildete Haken auf. Die Haken können beispielsweise als Schnapphaken oder Rasthaken ausgebildet sein. Der Batterieadapter ist mittels des Verriegelungselements zur lösbaren Verbindung mit Elektrowerkzeug ausgebildet. Ein Benutzer kann mittels Drückens die Verriegelung mit dem Elektrowerkzeug, insbesondere dem Handgriff des Elektrowerkzeugs, lösen. Das Kontaktierungselement, das Führungselement und das Verriegelungselement können ein Batteriefach ausbilden. Das Batteriefach ist dazu ausgebildet die Batterien aufzunehmen und anzuordnen. Das Batteriefach kann zumindest eine Batterie aufnehmen, vorzugsweise mehr als eine Batterie, wie beispielsweise zwei, drei, vier oder mehr als vier. Das Batteriefach kann die Batterie zumindest formschlüssig aufnehmen. Dabei ermöglicht das Festlegungselement, dass die Batterien in dem Batteriefach im Wesentlichen starr zueinander anordenbar sind.

Das Verschlusselement verschließt das Verriegelungselement. Zudem ist das Verschlusselement dazu ausgebildet, das Batteriefach zu verschließen. Das Verschlusselement kann beispielsweise als ein Verschlussdeckel ausgebildet sein. Weiter ist das Verschlusselement dazu ausgebildet, eine elektrische Kontaktierung der eingesetzten Batterien zu schließen, sodass die elektrische Energie von dem Elektrowerkzeug im verbunden Zustand entnehmbar ist. Hierzu kann das Verschlusselement zumindest ein Kontaktierungsdome aufweisen, um einen elektrischen Kreis zu schließen. Hierbei ist eine Parallel- oder Serienschaltung der Batterien möglich. Das Verschlusselement kann zumindest ein Halteelement aufweisen. Das Halteelement kann beispielsweise in Form eines C-förmigem, O-förmigen, L-förmigen, U-förmigen oder V-förmigen Steg ausgebildet sein. Das Halteelement ist dazu ausgebildet, einen Batteriekopf der Batterie zumindest teilweise aufzunehmen. Hierdurch kann das Halteelement die Batterie mittels des Batteriekopfs im Wesentlichen fest halten und die elektrische Kontaktierung sicherstellen. Das Kontaktierungselement kann gegenüberliegend zu dem Verschlusselement angeordnet sein.

**In** einer Ausführungsform des Batterieadapters ist das Verschlusselement relativ zu dem Verriegelungselement zumindest teilweise drehbar. Das Verschlusselement kann zumindest teilweise relativ zu dem Verriegelungselement gedreht werden. Hierdurch kann das Verschlusselement von dem Verriegelungselement gelöst werden. Zudem kann hierdurch das Batteriefach geöffnet und verschlossen werden. Dazu kann das Verriegelungselement weist zumindest eine Verriegelungsaufnahme aufweisen. Beispielsweise können drei Verriegelungsaufnahmen vorgesehen sein, die in 120° zueinander an dem Verriegelungselement ausgebildet sind. Das Verriegelungselement kann die Verriegelungsaufnahmen ausbilden. Es ist möglich, dass das Verriegelungselement und die Verriegelungsaufnahme einstückig sind. Das Verschlusselement kann zumindest einen Verschlussvorsprung aufweisen. Beispielsweise können drei Verschlussvorsprünge ausgebildet sein, die in 120° zueinander angeordnet sind. Der Verschlussvorsprung kann dazu ausgebildet sein, in die Verriegelungsaufnahme einzugreifen. Dabei kann das Verschlussvorsprung die Verriegelungsaufnahme hintergreifen. Das Verschlusselement kann den Verschlussvorsprung ausbilden. Es ist möglich, dass das Verschlusselement und der Verschlussvorsprung einstückig sind.

Alternativ ist auch denkbar, dass das Verschlusselement auf das Verriegelungselement aufschiebbar ist. Hierzu kann dann das Verschlusselement zumindest eine Verschlusschiene aufweisen. Die Verriegelungsaufnahme kann dann dazu ausgebildet sein, die Verschlussschiene aufzunehmen.

In einer Ausführungsform des Batterieadapters weist das Verschlusselement zumindest ein Fixierungselement auf, das dazu ausgebildet ist, das Verschlusselement relativ zu dem Verriegelungselement zu fixieren. Das Fixierungselement als beispielsweise als eine gefederte Erhebung, ein gefederter Vorsprung, ein gefederter Stift, ein gefederter Bolzen oder ein gefederter Zapfen ausgebildet sein. Das Fixierungselement ermöglicht, dass in einem verbundenen Zustand, das Verschlusselement und das Verriegelungselement gegenseitig fixierbar sind. Dies kann ein ungewünschtes, relatives verdrehen des Verschlusselements zu dem Verriegelungselement im Wesentlichen unterbinden. Hierzu kann das Verriegelungselement zumindest eine Fixierungsaufnahme aufweisen. Die Fixierungsaufnahme kann beispielsweise als ein Schraubdom ausgebildet sein. Das Fixierungselement kann dazu ausgebildet sein, in die Fixierungsaufnahme einzugreifen. Alternativ ist auch denkbar, dass das Verriegelungselement das Fixierungselement aufweist und das Verschlusselement die Fixierungsaufnahme umfasst.

In einer Ausführungsform des Batterieadapter weist das Verriegelungselement zumindest ein Leitelement auf und das Verschlusselement zumindest eine Leitelementaufnahme, wobei das Leitelement dazu ausgebildet ist, das Verschlusselement bei einem Verdrehen zu leiten. Das Verriegelungselement und das Leitelement können miteinander verbunden sein. Das Verriegelungselement kann das Leitelement ausbilden, wobei auch möglich ist, dass diese einstückig sind. Das Leitelement kann beispielsweise als ein Stift, ein Zapfen, ein Bolzen oder ein Vorsprung ausgebildet sein. Die Leitelementaufnahme kann mit dem Verschlusselement verbunden sein, wobei das Verschlusselement die Leitelementaufnahme auch ausbilden kann, sodass sie einstückig sein. Die Leitelementaufnahme kann beispielsweise als ein Kreisbogenabschnitt oder abschnittsweise ringförmig ausgebildet sein. Die Leitelementaufnahme kann als eine Ausnahme ausgebildet sein. Das Leitelement ist dazu ausgebildet, in dem verbundenen Zustand von dem Verschlusselement und dem Verriegelungselement in die Leitelementaufnahme einzugreifen. Das Leitelement kann dann das Verschlusselement mittels der Leitelementaufnahme entlang einer Bahn, wie beispielsweise eine im Wesentlichen abschnittsweisen Kreisbahn, zu leiten. Dies ermöglicht eine sichere und zuverlässige Anordnung von dem Verriegelungselement und dem Verschlusselement zueinander.

In einer Ausführungsform des Batterieadapters weist der Batterieadapter zumindest ein Verbindungselement auf, das dazu ausgebildet ist, das Verriegelungselement mit dem Führungselement zu verbinden. Es kann zumindest ein Verbindungselement vorgesehen sein, wobei auch zwei, drei, vier oder mehr als vier denkbar sind. Eine Mehrzahl an Verbindungselementen können beispielsweise im Wesentlichen in einem Dreieck, einem Viereck, einem Mehreck, einem Kreis oder einer Ellipse angeordnet und/oder ausgebildet sein. Das Verbindungselement ermöglicht eine sichere und zuverlässige Verbindung zwischen dem Verriegelungselement und dem Führungselement. Dies ermöglicht unter anderem die höhere Robustheit bei den Falltests.

In einer Ausführungsform des Batterieadapters ist das Verbindungselement als ein Verbindungszapfen ausgebildet, wobei der Verbindungszapfen dazu ausgebildet ist, in das Führungselement und/oder in das Verriegelungselement einzugreifen. Der Verbindungszapfen kann durch das Verriegelungselement oder das Führungselement ausgebildet sein. Der Verbindungszapfen kann beispielsweise auch Schraubzapfen sein, mittels dessen eine Verschraubung durch eine Schraube hergestellt werden kann. Das Führungselement und/oder Verriegelungselement weist zumindest eine Verbindungsaufnahme in Form von zumindest einer Verbindungsausnehmung auf. Die Verbindungsaufnahme kann beispielsweise als ein Schraubdom ausgebildet sein. Die Verschraubung kann dann über den Verbindungszapfen erfolgen, der in die Verbindungsaufnahme eingreift und durch die eine Schraube gedreht ist. Beispielsweise können zwei Verbindungszapfen und entsprechend zwei Verbindungsaufnahmen vorgesehen sein.

In einer Ausführungsform des Batterieadapters ist das Verbindungselement als eine Verbindungslasche ausgebildet, die dazu ausgebildet ist, mittels eines Verbindungsvorsprungs eine Verbindung auszubilden. Die Verbindungslasche kann durch das Verriegelungselement oder das Führungselement ausgebildet sein. Das Führungselement und/oder das Verriegelungselement kann den Verbindungsvorsprung aufweisen. Die Verbindungslasche und der Verbindungsvorsprung können eine Schnappverbindung oder eine Rastverbindung ausbilden. Die Verbindungslasche kann den Verbindungsvorsprung zumindest teilweise umgreifen. Der Verbindungsvorsprung kann beispielsweise auch als eine Verbindungsrampe ausgebildet sein. Beispielsweise können zwei Verbindungslaschen und zwei Verbindungsvorsprünge vorgesehen sein, wobei diese jeweils gegenüberliegend zueinander ausgebildet sein können. Hier sind beispielsweise zwei Verbindungszapfen und zwei Verbindungslaschen und zwei Verbindungsvorsprünge ausgebildet. Diese können im Wesentlichen in einem Viereck angeordnet und ausgebildet sein.

In einer Ausführungsform des Batterieadapters weist der Batterieadapter zumindest ein Rastelement auf, das dazu ausgebildet ist, das Kontaktierungselement mit dem Führungselement zu verrasten. Das Rastelement kann beispielsweise als ein Rasthaken ausgebildet sein. Das Rastelement kann an dem Führungselement oder dem Kontaktierungselement angeordnet sein. Das Rastelement kann durch das Führungselement oder das Kontaktierungselement ausgebildet sein, sodass diese einstückig sein können. Es ist zumindest eine Rastaufnahme vorgesehen, die dazu ausgebildet ist, mittels des Rastelements eine Rastverbindung auszubilden. Die Rastaufnahme kann beispielsweise als eine Öffnung nach Art eines Schlitzes ausgebildet sein. Es sind ein, zwei, drei, vier oder mehr als vier Rastelemente denkbar. Hier können beispielsweise vier Rastelemente und vier Rastaufnahmen vorgesehen sein.

In einer Ausführungsform des Batterieadapters weist der Batterieadapter ein Sicherungselement auf, das dazu ausgebildet ist, das Verschlusselement relativ zu dem Verriegelungselement zu sichern. Das Sicherungselement kann als ein flexibles Element ausgebildet sein, wie beispielsweise ein Draht, eine Leine, ein Sicherungsband, eine Sicherungskordel oder dergleichen. Das Verschlusselement und das Verriegelungselement können jeweils eine Öffnung aufweisen, die jeweils dazu ausgebildet ist, dass das Sicherungselement in die jeweilige Öffnung eingreift. Das Sicherungselement ermöglicht dann, dass das Verschlusselement und das Verriegelungselement miteinander verbunden sind und so ein Verlust des Verschlusselements vermieden wird.

Die Erfindung geht auch aus von einem System, insbesondere einem Elektrowerkzeugsystem, umfassend das oben beschriebene Elektrowerkzeug und den oben beschriebenen Batterieadapter. Der Batterieadapter ist mit dem Elektrowerkzeug verbindbar.

### Kurze Beschreibung der Zeichnungen

Die Erfindung wird nachfolgend anhand von bevorzugten Ausführungsformen erläutert. Die Zeichnungen im Folgenden zeigen:
Fig. 1a eine erste perspektivische Ansicht eines erfindungsgemäßen Batterieadapters;
Fig. 1b eine zweite perspektivische Ansicht des Batterieadapters;
Fig. 2 eine dritte perspektivische Ansicht des Batterieadapters mit einem geöffneten Batteriefach;
Fig. 3a eine erste perspektivische Ansicht eines Führungselements des Batterieadapters;
Fig. 3b eine zweite perspektivische Ansicht des Führungselements des Batterieadapters;
Fig. 3c eine perspektivische Ansicht eines Verriegelungselements des Batterieadapters;
Fig. 3d eine perspektivische Ansicht des Verriegelungselements mit dem verbundenen Führungselement;
Fig. 3e eine perspektivische Ansicht eines Kontaktierungselements des Batterieadapters;
Fig. 4a ein erstes System mit einem ersten Elektrowerkzeug und dem Batterieadapter;
Fig. 4b ein zweites System mit einem zweiten Elektrowerkzeug und dem Batterieadapter;
Fig. 4c ein drittes System mit einem dritten Elektrowerkzeug und dem Batterieadapter;

### Beschreibung der Ausführungsbeispiele

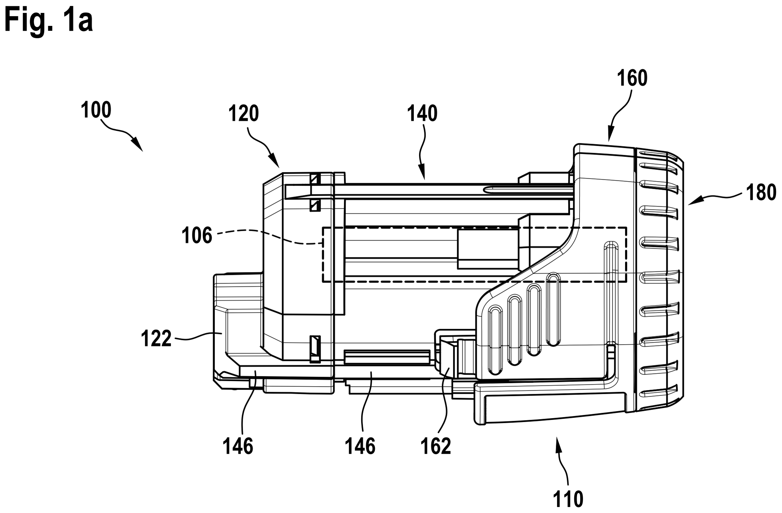

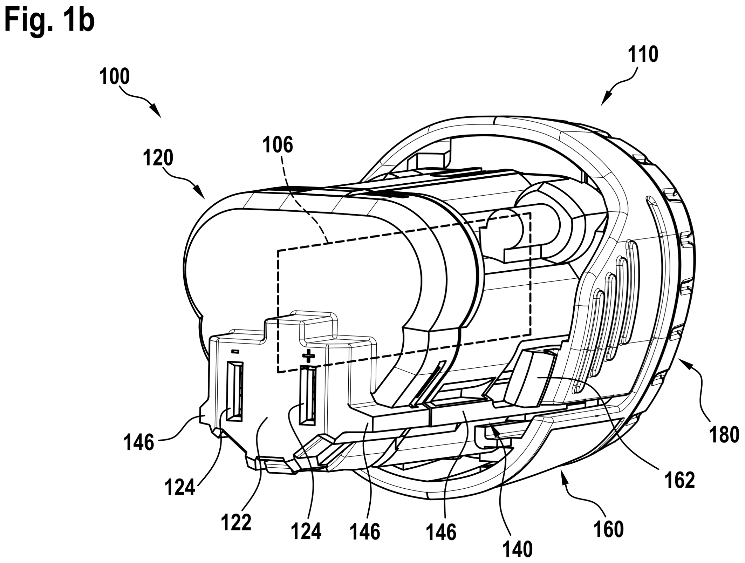

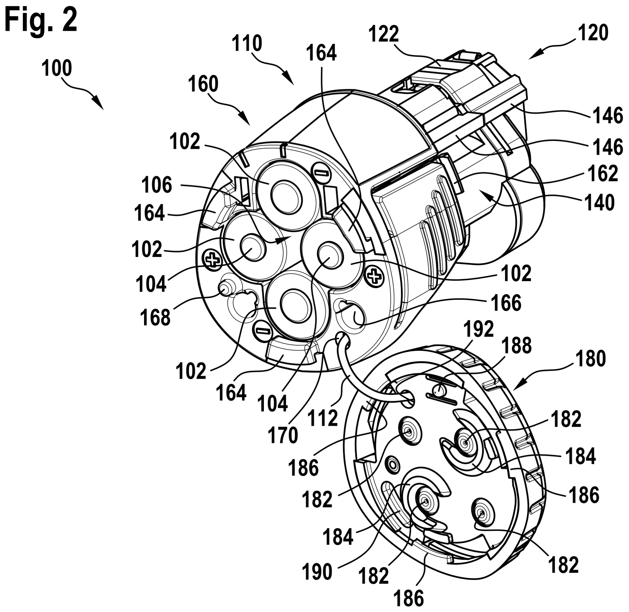

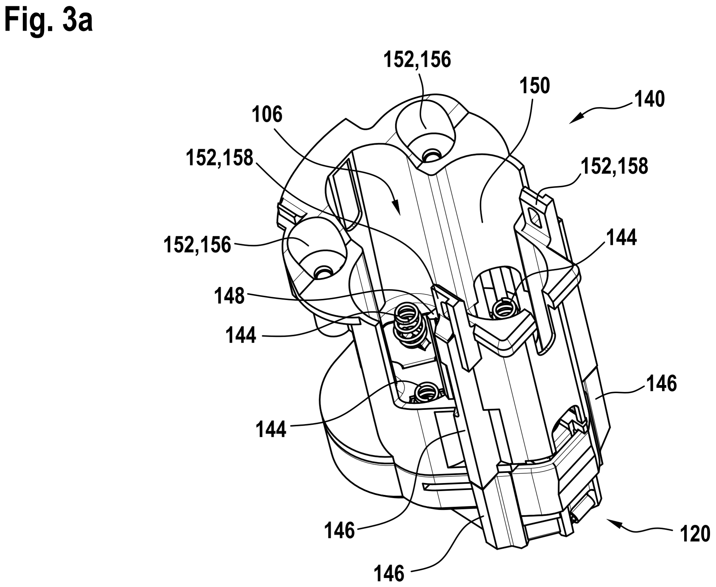

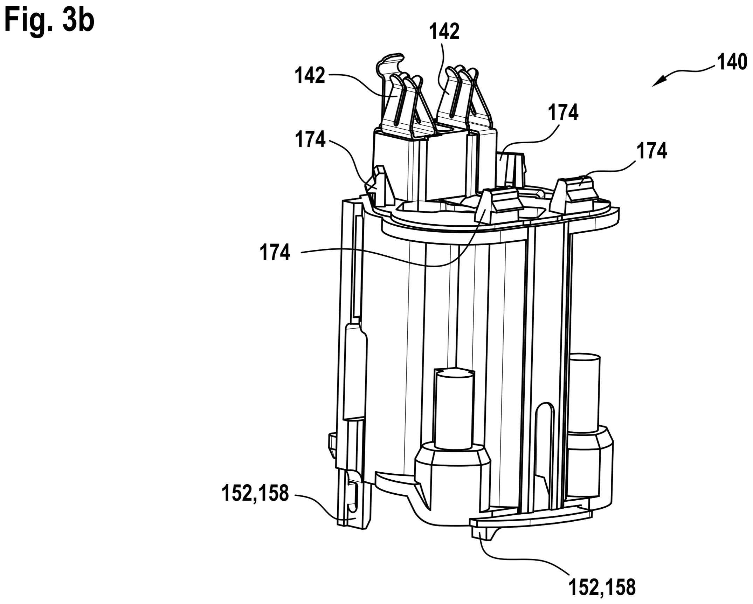

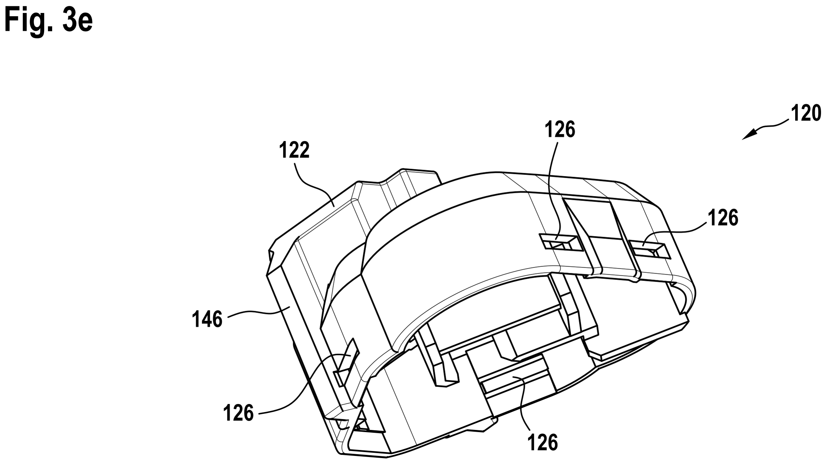

Fig. 1 zeigt einen erfindungsgemäßen Batterieadapter 100 für ein Elektrowerkzeug 200. Fig. 1a zeigt eine erste perspektivische Ansicht und Fig. 1b zeigt eine zweite perspektivische Ansicht des Batterieadapters 100. Der Batterieadapter 100 umfasst ein Gehäuse 110. Der Batterieadapter 100 ist dazu ausgebildet, eine Mehrzahl an Batterien, wie beispielsweise vier AA Batterien, aufzunehmen, siehe auch Fig. 2. Das Gehäuse 110 ist durch ein Kontaktierungselement 120, ein Führungselement 140, ein Verriegelungselement 160 und ein Verschlusselement 180 ausgeformt. Das Kontaktierungselement 120 dazu vorgesehen, eine elektrische Kontaktierung mit dem Elektrowerkzeug 200 auszubilden. Hierdurch wird das Elektrowerkzeug 200 mit elektrischer Energie versorgt, sofern die Batterien in dem Batterieadapter 100 eingesetzt sind. Das Kontaktierungselement 120 umfasst einen Kontaktierungsdom 122, siehe auch Fig. 1b und 3e. Der Kontaktierungsdom 122 umfasst hier beispielhaft zwei längliche Öffnungen 124. Das Elektrowerkzeug 200 umfasst eine nicht dargestellte korrespondierende elektrische Aufnahme, die zwei nicht dargestellte längliche, flache Stifte umfasst. Die Stifte greifen in einem verbundenen Zustand von dem Batterieadapter 100 mit dem Elektrowerkzeug 200 in die Öffnungen 124 ein. Das Kontaktierungselement 120 umschließt zumindest teilweise Kontaktklemmen 142 und Kontaktierungsfedern 144, siehe auch Fig. 3a und 3b. Die Kontaktklemmen 142 sind dazu vorgesehen, die Stifte des Elektrowerkzeugs 200 zumindest teilweise zu umschließen und eine elektrische Verbindung auszuformen. Die Kontaktierungsfedern 144 sind dazu vorgesehen, die eingesetzten Batterien 102 zu beaufschlagen.

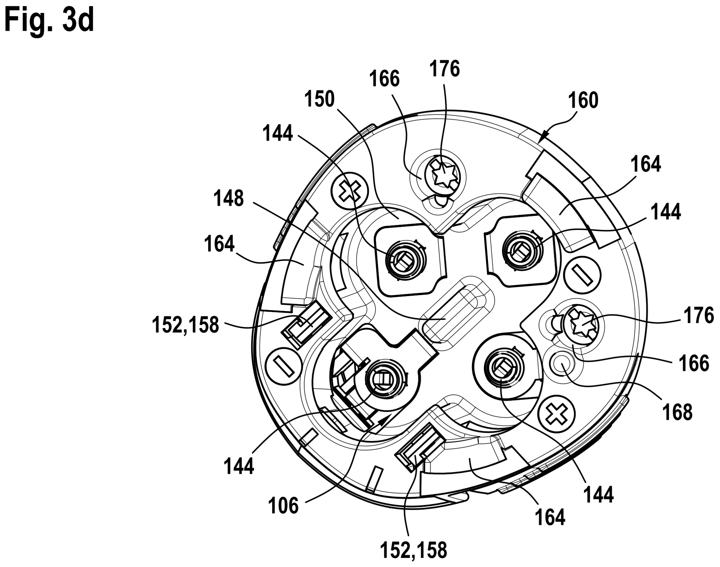

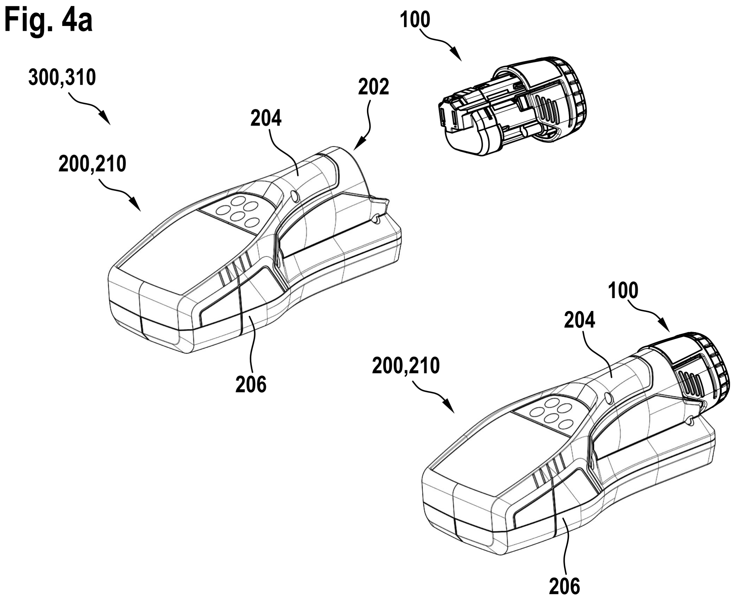

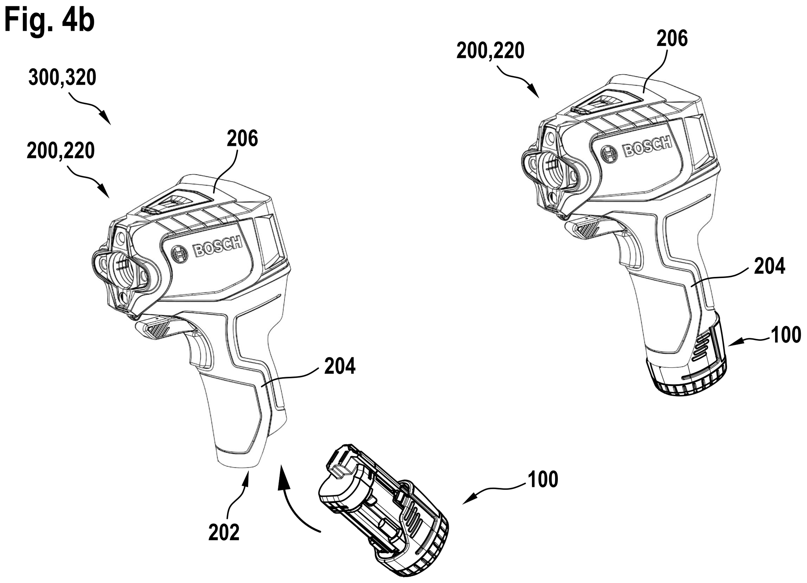

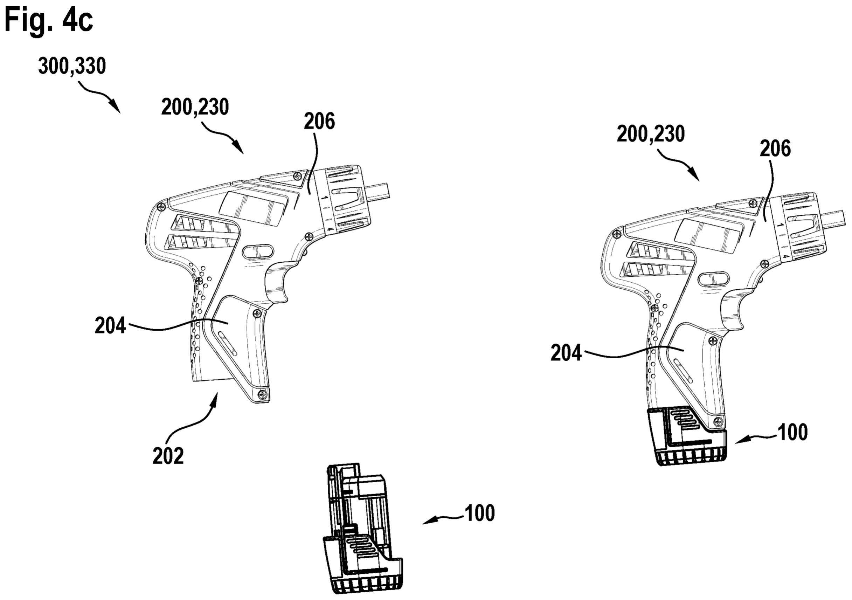

Das Führungselement 140 ist zu einer Führung des Batterieadapters 100 in einer Führungsaufnahme 202 des Elektrowerkzeugs 200 ausgeformt, siehe auch Fig. 4. Das Führungselement 140 ist als ein Führungsgerüst ausgeformt, siehe auch Fig. 3a und 3b. Das Führungselement 140 ist kompatibel zu der Führungsaufnahme 202 des Elektrowerkzeugs 200 ausgeformt. Das Führungselement 140 dient zu einer Längsführung innerhalb eines Handgriffs 204 des Elektrowerkzeugs 200. Die Führungsaufnahme 202 ist in einem Innenraum des Handgriffs 204 des Elektrowerkzeug 200 und als ein im Wesentlichen zylindrischer Schacht ausgeformt. Das Führungselement 140 umfasst zumindest eine Längsführung 146. Die Längsführung 146 ist beispielhaft als zwei Längsführungsschienen ausgeformt. Hier bildet das Kontaktierungselement 120 die beiden Längsführungen 146 ebenfalls aus. Das Führungselement 140 umfasst ein Festlegungselement 148, siehe auch Fig. 3a und 3d. Das Festlegungselement 148 ist in einem Innenraum 150 des Führungselements 140 ausgeformt, siehe auch Fig. 3a und 3d. Das Festlegungselement 148 ist beispielhaft als ein Festlegungssteg ausgeformt. Das Festlegungselement 148 ist dazu vorgesehen, die eingesetzten Batterien 102 relativ zueinander festzulegen.

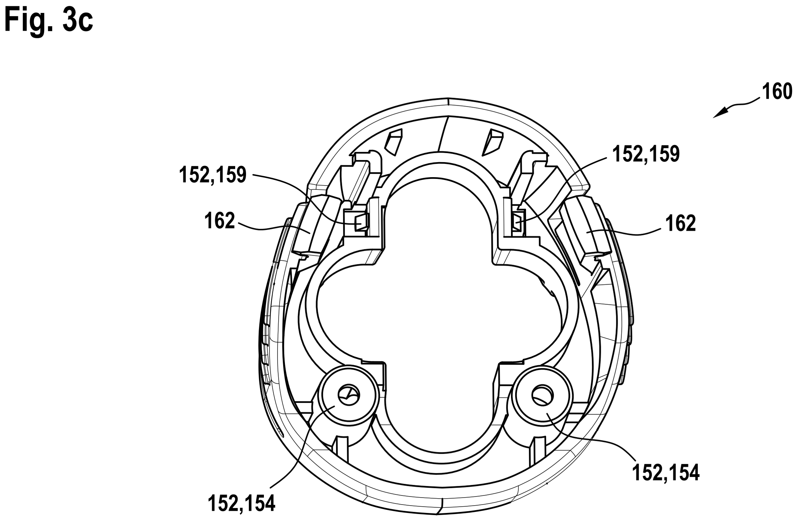

Das Verriegelungselement 160 ist dazu vorgesehen, eine Verriegelung mit einem Gehäuse 206, insbesondere dem Handgriff 204, des Elektrowerkzeugs 200 auszuformen. Das Verriegelungselement 160 umfasst zumindest einen Haken 162. Der Haken 162 ist dazu vorgesehen, in eine nicht dargestellte Aufnahme des Handgriffs 204 des Elektrowerkzeugs 200 einzugreifen und dabei den Batterieadapter 100 mit dem Elektrowerkzeug 200 zu verriegeln, siehe auch Fig. 4. Das Verriegelungselement 160 umfasst zwei gegenüberliegend zueinander ausgebildete Haken 162, die beispielhaft als Schnapphaken ausgeformt sind. Das Kontaktierungselement 120, das Führungselement 140 und das Verriegelungselement formen ein Batteriefach 106 aus, siehe auch Fig. 3. Das Batteriefach 106 ist dazu vorgesehen, die Batterien 102 aufzunehmen und anzuordnen. Das Batteriefach 106 nimmt die Batterien 102 zumindest formschlüssig auf, siehe auch Fig. 2.

Fig. 2 stellt eine dritte perspektivische Ansicht des Batterieadapters 100 mit dem geöffneten Batteriefach 106 dar. Das Verschlusselement 180 ist dazu vorgesehen, das Verriegelungselement 160 zu verschließen. Das Verschlusselement 180 ist zudem dazu vorgesehen, dass Batteriefach 106 zu verschließen. Das Verschlusselement 180 ist beispielhaft als ein Verschlussdeckel ausgeformt. Das Verschlusselement 180 ist dazu vorgesehen, die elektrische Kontaktierung der eingesetzten Batterien 102 zu schließen. Das Verschlusselement 180 umfasst zumindest einen Kontaktierungsdome 182, wobei hier vier Kontaktierungsdome 182 ausgeformt sind. Weiter umfasst das Verschlusselement 180 zumindest ein Halteelement 184. Hier sind beispielhaft zwei Halteelemente 184 vorgesehen, die C-förmig ausgeformt sind. Das Halteelement 184 ist dazu vorgesehen, einen Batteriekopf 104 der Batterie 102 zumindest teilweise aufzunehmen. Das Kontaktierungselement 120 ist gegenüberliegend zu dem Verschlusselement 180 angeordnet. Das Verschlusselement 180 ist relativ zu dem Verriegelungselement 160 zumindest teilweise drehbar. Das Verriegelungselement 160 umfasst zumindest eine Verriegelungsaufnahme 164. Hier sind drei Verriegelungsaufnahmen 164 ausgeformt, die in etwa 120° zueinander an dem Verriegelungselement 160 ausgeformt sind. Das Verschlusselement 180 umfasst zumindest einen Verschlussvorsprung 186, wobei hier beispielhaft drei Verschlussvorsprünge 186 ausgeformt sind. Die drei Verschlussvorsprünge 186 sind in etwa 120° zueinander angeordnet. Der Verschlussvorsprung 186 ist dazu vorgesehen, in die Verriegelungsaufnahme 164 einzugreifen. Das Verschlusselement 180 formt den Verschlussvorsprung 186 aus, sodass sie einstückig sind. Das Verschlusselement 180 umfasst ein Fixierungselement 188. Das Fixierungselement 188 ist dazu vorgesehen, das Verschlusselement 180 relativ zu dem Verriegelungselement 160 zu fixieren. Das Fixierungselement 188 ist beispielhaft als ein gefederter Stift ausgeformt. Das Verriegelungselement 160 umfasst eine Fixierungsaufnahme 166. Die Fixierungsaufnahme 166 ist beispielhaft als ein Schraubdom ausgeformt. Das Fixierungselement 188 ist dazu vorgesehen, in die Fixierungsaufnahme 166 einzugreifen, wenn das Verschlusselement 180 mit dem Verriegelungselement 160 verbunden ist.

Das Verriegelungselement 160 umfasst ein Leitelement 168. Das Verschlusselement 180 umfasst eine Leitelementaufnahme 190. Das Leitelement 168 ist dazu vorgesehen, das Verschlusselement 180 bei einem Verdrehen zu leiten. Das Verriegelungselement 160 und das Leitelement 168 sind miteinander verbunden und hier beispielhaft einstückig. Das Leitelement 168 ist als ein Zapfen ausgeformt. Die Leitelementaufnahme 190 ist mit dem Verschlusselement 180 verbunden und hier einstückig. Die Leitelementaufnahme 190 ist beispielhaft als eine abschnittsweise ringförmige Ausnehmung ausgeformt. Das Leitelement 168 ist dazu vorgesehen, in dem verbundenen Zustand von dem Verschlusselement 180 und dem Verriegelungselement 160 in die Leitelementaufnahme 190 einzugreifen, wobei das Leitelement 168 das Verschlusselement 180 mittels der Leitelementaufnahme 190 entlang einer Bahn leitet. Der Batterieadapter 100 umfasst ein Sicherungselement 112. Das Sicherungselement 112 ist dazu vorgesehen, das Verschlusselement 180 relativ zu dem Verriegelungselement 160 zu sichern. Das Sicherungselement 112 ist beispielhaft als ein flexibles Element ausgeformt. Das Verschlusselement 180 und das Verriegelungselement 160 umfassen jeweils eine Öffnung 170, 192. Die Öffnungen 170, 192 sind jeweils dazu vorgesehen, dass das Sicherungselement 112 in die jeweilige Öffnung 170, 192 eingreift.

Fig. 3a zeigt eine erste perspektivische Ansicht des Führungselements 140, Fig. 3b eine zweite perspektivische Ansicht des Führungselements 140, Fig. 3c eine perspektivische Ansicht des Verriegelungselements, Fig. 3d eine perspektivische Ansicht des Verriegelungselements 160 mit dem verbundenen Führungselement 140 und Fig. 3e eine perspektivische Ansicht des Kontaktierungselements des Batterieadapters 100. Der Batterieadapter 100 umfasst zumindest ein Verbindungselement 152. Das Verbindungselement 152 ist dazu vorgesehen, das Verriegelungselement 160 mit dem Führungselement 140 zu verbinden. Beispielsweise ist eine Mehrzahl an Verbindungselementen 152 vorgesehen. Die Mehrzahl der Verbindungselemente 152 sind hier beispielhaft im Wesentlichen in einem Viereck ausgeformt sind. Das Verbindungselement 152 ist hier beispielhaft als zwei Verbindungszapfen 154 ausgeformt. Der Verbindungszapfen 154 ist dazu vorgesehen, in das Führungselement 140 einzugreifen. Der Verbindungszapfen 154 ist hier durch das Verriegelungselement 160 ausgeformt, siehe auch Fig. 3c. Der Verbindungszapfen 154 ist beispielhaft als ein Schraubzapfen ausgebildet, mittels dessen eine Verschraubung durch eine Schraube hergestellt wird. Das Führungselement 140 umfasst zumindest eine Verbindungsaufnahme 156. Die Verbindungsaufnahme 156 ist in Form von zumindest einer Verbindungsausnehmung ausgeformt, wobei die Verbindungsaufnahme 156 beispielhaft als ein Schraubdom ausgeformt ist. Es sind beispielhaft zwei Verbindungsaufnahmen 156 ausgebildet. Die Verschraubung von dem Führungselement 140 und dem Verriegelungselement 160 erfolgt über den Verbindungszapfen 154, der in die Verbindungsaufnahme 156 eingreift und durch die eine Schraube 176 gedreht ist, siehe auch Fig. 3d. Es sind zwei Verbindungszapfen 154 und entsprechend zwei Verbindungsaufnahmen 156 ausgebildet, die mittels zwei Schrauben 176 verschraubt sind. Weiter ist das Verbindungselement 152 als eine Verbindungslasche 158 ausgeformt, wobei beispielhaft zwei Verbindungslaschen 158 vorgesehen sind. Die Verbindungslasche ist dazu vorgesehen, mittels eines Verbindungsvorsprungs 159 eine Verbindung auszuformen, siehe auch Fig. 3c. Die Verbindungslasche 158 ist hier beispielhaft durch das Führungselement 140 ausgeformt, wobei das Verriegelungselement 160 dann den Verbindungsvorsprung 159 ausbildet. Die Verbindungslasche 158 und der Verbindungsvorsprung 159 formen eine Schnappverbindung aus, dabei umgreift die Verbindungslasche 158 den Verbindungsvorsprung 159 zumindest teilweise. Beispielhaft sind hier zwei Verbindungslaschen 158 und zwei Verbindungsvorsprünge 159 gegenüberliegend zueinander ausgeformt. Zudem umfasst der Batterieadapter 100 zumindest ein Rastelement 174, wobei hier beispielhaft vier Rastelemente 174 ausgeformt sind. Das Rastelement 174 ist dazu vorgesehen, das Kontaktierungselement 120 mit dem Führungselement 140 zu verrasten. Das Rastelement 174 ist beispielhaft als ein Rasthaken ausgeformt, wobei das Rastelement 174 an dem Führungselement 140 angeordnet ist. Das Rastelement 174 ist beispielhaft durch das Führungselement 140 ausgeformt, sodass diese einstückig sind. Der Batterieadapter 100 umfasst zumindest eine Rastaufnahme 126, wobei hier vier Rastaufnahmen 126 ausgeformt sind. Die Rastaufnahme 126 ist dazu vorgesehen, mittels des Rastelements 126 eine Rastverbindung auszubilden. Die Rastaufnahme 126 ist beispielhaft als eine Öffnung nach Art eines Schlitzes ausgeformt. Das Rastelement 174 ist dazu ausgebildet, in die Rastaufnahme 126 einzugreifen und die Rastverbindung auszubilden. Beispielhaft sind vier Rastelemente 174 und vier Rastaufnahmen 126 ausgeformt.

In Fig. 4 ist jeweils ein System 300 mit dem Elektrowerkzeug 200 und dem Batterieadapter 100 gezeigt. Dabei zeigt Fig. 4a ein erstes System 310 mit einem ersten Elektrowerkzeug 210 und dem Batterieadapter 100. In Fig. 4a ist das erste Elektrowerkzeug 210 als ein Messwerkzeug dargestellt, wobei das Messwerkzeug als ein Detektionsgerät ausgebildet ist. Fig. 4b stellt ein zweites System 320 mit einem zweiten Elektrowerkzeug 220 und dem Batterieadapter dar. Dabei ist das zweite Elektrowerkzeug 220 als ein Messwerkzeug ausgeformt. Das Messwerkzeug ist hier als eine Thermokamera ausgebildet. In Fig. 4c ist ein drittes System 330 mit einem dritten Elektrowerkzeug 230 und dem Batterieadapter 100 gezeigt. Das dritte Elektrowerkzeug 230 ist hier als eine Handwerkzeugmaschine ausgeformt, wobei die Handwerkzeugmaschine als ein Schrauber ausgeformt ist. Das erste, zweite und dritte Elektrowerkzeug 210, 220, 230 ist jeweils mit dem Batterieadapter 100 verbindbar.

## Patentansprüche

1. Batterieadapter (100) für ein Elektrowerkzeug (200) mit einem Kontaktierungselement (120) zur elektrischen Kontaktierung mit dem Elektrowerkzeug (200), mit einem Führungselement (140) zur Führung in einer Führungsaufnahme (202) des Elektrowerkzeugs (200) und mit einem Verriegelungselement (160) zur Verriegelung mit einem Gehäuse (206) des Elektrowerkzeugs (200),
**gekennzeichnet durch** ein Verschlusselement (180), das dazu ausgebildet ist, das Verriegelungselement (160) zu verschließen.

2. Batterieadapter (100) nach Anspruch 1, **dadurch gekennzeichnet, dass** das Verschlusselement (180) relativ zu dem Verriegelungselement (160) zumindest teilweise drehbar ist.

3. Batterieadapter (100) nach Anspruch 1 oder 2, **dadurch gekennzeichnet, dass** das Verschlusselement (180) zumindest ein Fixierungselement (188) aufweist, das dazu ausgebildet ist, das Verschlusselement (180) relativ zu dem Verriegelungselement (160) zu fixieren.

4. Batterieadapter (100) nach einem der vorhergehenden Ansprüche, **dadurch gekennzeichnet, dass** das Verriegelungselement (160) zumindest ein Leitelement (168) aufweist und das Verschlusselement (180) zumindest eine Leitelementaufnahme (190), wobei das Leitelement (168) dazu ausgebildet ist, das Verschlusselement (180) bei einem Verdrehen zu leiten.

5. Batterieadapter (100) nach einem der vorhergehenden Ansprüche, **gekennzeichnet durch** zumindest ein Verbindungselement (152), das dazu ausgebildet ist, das Verriegelungselement (160) mit dem Führungselement (140) zu verbinden.

6. Batterieadapter (100) nach Anspruch 5, **dadurch gekennzeichnet, dass** das Verbindungselement (153) als ein Verbindungszapfen (154) ausgebildet ist, wobei der Verbindungszapfen (154) dazu ausgebildet ist, in das Führungselement (140) und/oder in das Verriegelungselement (160) einzugreifen.

7. Batterieadapter (100) nach Anspruch 5, **dadurch gekennzeichnet, dass** das Verbindungselement (152) als eine Verbindungslasche (158) ausgebildet ist, die dazu ausgebildet ist, mittels eines Verbindungsvorsprungs (159) eine Verbindung auszubilden.

8. Batterieadapter (100) nach einem der vorhergehenden Ansprüche, **gekennzeichnet durch** zumindest ein Rastelement (174), das dazu ausgebildet ist, das Kontaktierungselement (120) mit dem Führungselement (140) zu verrasten.

9. Batterieadapter (100) nach einem der vorhergehenden Ansprüche, **gekennzeichnet durch** ein Sicherungselement (112), das dazu ausgebildet ist, das Verschlusselement (180) relativ zu dem Verriegelungselement (160) zu sichern.

10. System (300) umfassend ein Elektrowerkzeug (200) und ein Batterieadapter (100) nach einem der vorhergehenden Ansprüche.
